# EUROPEAN PATENT SPECIFICATION

(11) **EP 0 715 110 B1**
(45) Date of publication and mention of the grant of the patent: **09.07.1997**
(21) Application number: 95500062.5
(22) Date of filing: 26.04.1995
(51) Int. Cl.: F16L 33/00, A47L 15/42, D06F 39/08

(54) **Coupling of a hose to a household drain pump**
Kupplung eines Abflussschlauches an eine Entleerungspumpe eines Haushaltsgerätes
Accouplement d'un tuyau à une pompe électroménager

(30) Priority: 28.11.1994 ES 9402437
(43) Date of publication of application: 05.06.1996
(73) Proprietor: FAGOR, S.COOP. LTDA., 20500 Mondragon (Guipuzcoa) (ES)
(72) Inventor: Arregui Sanz, Javier, E-20560 - Onati - Gipuzkoa (ES)

(56) References cited:
- DE-A- 3 537 184
- DE-U- 7 025 698
- FR-A- 1 283 919

## Description

### TECHNICAL FIELD OF THE INVENTION

The present invention relates to the coupling of a flexible run-off hose and a rigid pipe in a household washing machine or dishwasher.

### PRIOR ART

Couplings are known between a flexible run-off hose and the rigid outlet pipe of the drain pump in washing machines including a rubber non-return valve in the form of a rubber disc, as in DE-3715 285, where the end of the hose is of greater diameter than the remainder of the hose, to secure the connection with the rigid pipe using clamps or other fittings, while the seal is obtained with a "O" ring integral with the non-return valve fitted in a frontal annular groove inside the bore of the outlet pipe, and the "O" ring is tightened against its housing by an additional intermediate tubular element between the pump outlet pipe and the hose end.

In the coupling of Patent DE-4201799, the ends of the hose and rigid pipe are profiled to fit inside one another to obtain a watertight seal, and have axial projections for securing the flexible hose to the rigid pipe.

In the coupling described in EP-447622, the seal is obtained by the pressure of a projecting edge of the flexible hose against its seating groove inside the tube.

### DISCLOSURE OF THE INVENTION

The object of the invention is a coupling between a flexible run-off hose and the outlet pipe from the drain pump in a household appliance, where the secure and sealed connection between them, with the non-return valve incorporated, is direct, without the need to insert additional intermediate elements or the use of fittings or tools, with the benefits of savings of time, fittings and said intermediate element, and the reduced cost of the non-return valve, which does not require a seal ring.

The invention provides a coupling as defined in claim 1.

Once the hose enlarged end is inserted into the outlet pipe bore, said cylindrical skirt, part of which remained inside the outlet pipe bore, folds toward the pump to cover the outlet pipe edge, fitting over it and overlapping a section thereof, tightening it thanks to its elasticity, and thereby ensuring the watertight seal of the coupling. The hose end skirt is fixed to the rigid outlet pipe by an outside annular ridge on the hose end skirt which, after the skirt is folded, fits into an outside annular groove on the rigid outlet pipe.

### DESCRIPTION OF THE DRAWINGS

Figure 1 shows a longitudinal section of the coupling of a flexible hose with the outlet pipe of a household drain pump, which is the object of the invention.

Figure 2 shows a longitudinal section of the hose previous to coupling.

Figure 3 is an elevation view of the coupling non-return valve when open.

### DETAILED DESCRIPTION OF THE INVENTION

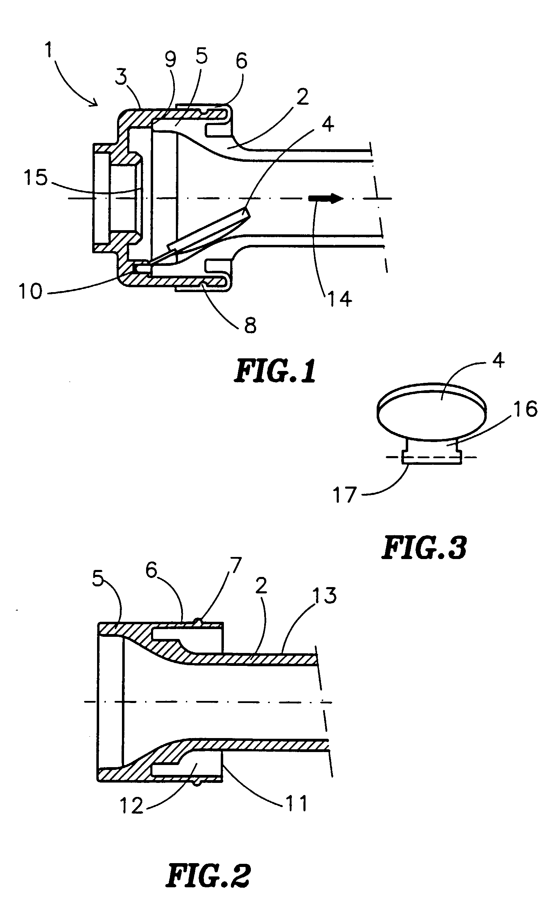

With reference to figures 1 - 3, the embodiment of the coupling 1 object of the invention comprises the cylindrical run-off hose 2 made of flexible plastic, the coupling hose end 5 being larger than the hose remaining tube 13, the rigid outlet pipe 3, which is also cylindrical, from a drain water pump for a household washing machine, and the rubber non-return valve 4 incorporated into the coupling 1, with water flowing in the direction of the arrow 14.

The outside diameter of the hose end 5 is slightly less than the bore of the pump outlet pipe 3, and the coupling is telescopic, with the hose end 5 fitting into the outlet pipe bore as far as the inside front stop 9.

The enlarged end 5 of the hose (2) is almost twice the diameter of the remaining tube 13 of the hose, and its internal diameter reduces gradually, to limit resistance to the water flow 14 and allow the tolting of the non-return valve 4 when open, while the outside diameter reduces toward the hose remainder tube by means of a diameter step 11 enabling the extension of the hose end periphery toward the hose remainder tube 13, forming the elastic cylindrical skirt 6, which delimits a hollow space 12 remaining between skirt and hose tube 13. The hose end skirt 6 has a annular ridge 7 of semicircular cross-section.

The inside wall of the outlet pipe 3 thickens so that the edge forms a front stop 9 against the hose end 5 insertion, on part of which has an arched groove 10 to fix the non-return valve 4 and an internal duct 15, of smaller diameter, for water from the drain pump. The outlet pipe 3 has, near its edge, an annular groove 8 on the outside into which to pressure-fit the annular ridge 7 on the hose skirt 6.

The non-return valve 4 is mold-manufactured of rubber in the shape of a flat disc, and it is located inside the coupling 1 to close the water pump duct 15; extending from the valve disc, on the same plane, it has a flexible arm 16 ending in a straight dilation 17 which fits into said arched groove 10 to hold the non-return valve 4 in place, enabling it to swing on its arm 16 under the action of the water flow 14.

To carry out the connection of the coupling 1, once the non-return valve 4 is positioned in its seating groove 10 in the front wall of the outlet pipe 3, the enlarged end 5 of the hose 2 is inserted in the outlet pipe bore as far as its stop edge 9, in turn securing the non- return valve 4, placing the part of the hose elastic skirt 6 delimiting the hollow spaced 12 inside the outlet pipe 3. The elastic skirt 6 is then reversebly folded over the outlet pipe 3 periphery until its ridge 7 fits into the annular groove 8, thereby providing a watertight coupling under the elastic pressure of the hose skirt 6 around the outlet pipe 3, as well as a secure coupling because of the attachment by means of the annular ridge (7) and the ouside annular groove 8.

## Claims

1. Coupling of a hose to a household drain pump, particularly in a washing machine or dishwasher, comprising a flexible run-off hose (2) with a thickened coupling end (5), a cylindrical rigid outlet pipe (3) from the drain pump, and a non-return rubber valve (4) in the shape of a disc provided with a protruding arm (16), fitted in the coupling (1), **characterised in that** the wall of the thickened end (5) of the hose extends in the opposite direction to surround the hose remainder tube (13), forming a thin, elastic, closed- contour cylindrical skirt (6), with a an outside annular ridge (7); said pump outlet pipe (3) has an inside front stop formed by a thickening of its wall, and an outside annular groove (8), near to its edge, so that the hose (2) is connected to the outlet pipe (3) by inserting the hose end (5) telescopically into the outlet pipe (3) bore as far as said stop (9), folding the hose skirt (6) over the periphery of the outlet pipe (3) until said annular ridge (7) fits into the annular groove (8) so that this connection also ensures that the coupling is watertight sealed.

2. Coupling of a hose to the pump outlet pipe according to claim 1 wherein said non-return valve (4) has a straight dilation (17) in the end of said arm (16) which fits into an arched groove (10) in said internal thickened front wall of the outlet pipe (3), secured by abutting of the hose end (5) against said front stop (9) in the pump outlet pipe (3) the drain pump.

## Patentansprüche

1. Kupplung eines Abflusschlauches an eine Etleerungspumpe eines Haushaltsgerätes, insbesondere einer Wasch- oder Geschirrspülmaschine, welche einen flexiblen Abflusschlauch (2) mit dem angekoppelten verdickten Ende (5), ein zylindrische, steife Ablaufstutzen (3) der Entleerungspumpe und ein den Rückfluss verhinderndes Gummiventil (4) in Form einer in der Kupplung (1) gelagerten Scheibe enthält, das mit Hilfe eines vorstehenden Armes (16) abschwenkt, **dadurch gekennzeichnet,** dass sich die Wand des verdickten Schlauchendes (5) in entgegengesetzter Richtung erstreckt und das Schlauchrohr (13) umgibt, um eine dünne, elastische, zylinderförmige und mit einem äusseren Ringrelief (7) versehene Manschette (6) geschlossener Kontur zu bilden und der Ablaufstutzen (3) einen durch die Verdickung seiner Wand und eine in der Nähe des Randes vorgesehene äussere ringförmige Rille (8) gebildeten inneren Anschlag (9) aufweist, wobei die Kupplung (1) des Abflusschlauches (2) an die Ablaufstutzen (3) dadurch erfolgt, dass das Schlauchende (5) teleskopisch bis zu diesem Anschlag (9) in den den Ablaufstutzen (3) eingeschoben und die Manschette (6) über die Kante der Ablaufstutzen (3) gebogen wird, bis das Ringrelief (7) so in die ringförmige Rille eindringt, dass dieser Anschluss auch die Kupplung mit dichtem Verschluss gewährleistet.

2. Kupplung eines Abflusschlauches an eine Entleerungspumpe, nach Anspruch 1 dadurch gekennzeichnet, dass das den Rückschlag Ventil (4) am Ende des Armes (16) eine gerade, in eine Vertiefung (10) der inneren Verdickung der Wand des Ablaufstutzen (3) einrastende Schwenkachse (17) besitzt, die nicht zur Dichtheit der Kupplung beiträgt, und durch den Anschlag des Schlauchendes (5) gegenüber dem frontalen Anschlag (9) des Ablaufstutzen (3) der Pumpe befestigt wird.

## Revendications

1. Accouplement d'un tuyau à une pompe électroménager à eau, particulièrement dans une machine à laver ou dans un lave-vaisselle, comprenant un tuyau (2) flexible dont l'extrémité (5) accouplée est grossie, un conduit (3) d'écoulement sortie de la pompe, cylindrique et rigide, et une soupape (4) en caoutchouc anti-retour en forme de disque logé dans l'accouplement (1) qui pivote à l'aide d'un bras (16) sortant, caractérisé en ce que la paroi de l'extrémité (5) grossie de tuyau s'étende en sens opposé en entourant le tube (13) de tuyau, pour former une jupe (6) cylindrique à contour fermé, mince et élastique, et pourvue d'un relief (7) annulaire extérieur, et le conduit (3) d'écoulement a une butée (9) interne formée moyennant le grossissement de sa paroi et un sillon (8) annulaire extérieur proche du bord, en effectuant l'accouplement (1) du tuyau (2) au conduit (3) moyennant l'introduction télescopique de l'extrémité (5) de tuyau dans le conduit (3) d'écoulement jusqu'à dite cale (9) et en pliant la petite jupe (6) au-delà du bord du conduit (3) jusqu'ã remettre dit relief (7) annulaire dans dit sillon (8) annulaire, de sorte que cette connexion assure aussi l'accouplement avec fermeture étanche.

2. Accouplement d'un tuyau à une pompe électroméager selon la revendication 1, caractérisé en ce que la soupape (4) anti-retour a à l'extrémité de dit bras (16) un axe (17) pivotant droit enclavé dans un enfoncement (10) dans dite grossissement interne de la paroi du conduit (3), en ne collaborant pas dans l'étanchéité de l'accouplement, qui est assuré en affrontant jusqu'à la limite l'extrémité (5) du tuyau contre dite butée (9) du conduit (3) de sortie de la pompe.
